# EUROPEAN PATENT APPLICATION

(11) **EP 4 517 119 A1**
(43) Date of publication of application: **05.03.2025**
(21) Application number: 23194701.1
(22) Date of filing: 31.08.2023
(51) Int. Cl.: F16C 17/03, F16C 17/06, F16C 33/20, F04D 29/047

(54) **BEARING ASSEMBLY**

(71) Applicant: Sulzer Management AG, 8401 Winterthur (CH)
(72) Inventor: Schneider, Lorenz, 8200 Schaffhausen (CH); Welschinger, Thomas, 78315 Radolfzell (DE); Kränzler, Thomas, 88682 Salem (DE)
(74) Representative: IPS Irsch AG

(57) **Abstract**

A bearing assembly (1) for supporting a shaft (110) of a rotating machine is proposed. The bearing assembly comprises a bearing housing (2) for receiving a lubricant, a rotary part (3) configured to be fixedly connected to the shaft (110) and a stationary part (4) fixed relative to the bearing housing (2), wherein the rotary part (3) has a rotor bearing surface (31) and the stationary part (4) has a stator bearing surface (41) configured and arranged for interacting with the rotor bearing surface (31), wherein the rotary part (3) or the stationary part (4) comprises a base body (5) and a polymer layer (6), wherein the base body (5) has a structured surface (51), wherein the polymer layer (6) is directly fixed to the structured surface (51), and wherein the polymer layer (6) forms the rotor bearing surface (31) or the stator bearing surface (41). Furthermore, a rotating machine is proposed having such a bearing assembly.

## Description

The invention relates to a bearing assembly for a rotating machine and to a rotating machine for acting on a process fluid in accordance with the preamble of the respective independent claim.

Rotating machines for acting on a process fluid, for example centrifugal pumps, compressors, or turbines, typically comprise a stationary rotating machine housing enclosing a rotor, e.g. an impeller for interacting with the fluid and a shaft for rotating the rotor about an axial direction. The shaft can be driven by a drive unit. The end of the shaft that is connected to the drive unit is also referred to as the drive end of the shaft, whereas the other end of the shaft is referred to as non-drive end of the shaft. The rotating machine further comprises at least one bearing assembly with a radial and/or an axial (thrust) bearing for supporting the shaft and the rotor. Typically, the bearing has a separate housing which is fixedly connected to the housing of the rotating machine. Since the bearing assemblies usually require lubrication and/or cooling, a lubricant, for example an oil or any other suited fluid, is supplied to the bearing assembly. In many applications this lubricant shall neither leak from the bearing assembly into the environment nor get into contact with the fluid the rotating machine is acting on to avoid any contamination of this fluid or the environment with the lubricant.

In particular in centrifugal pumps but also in other rotating machines two basic principles are known for supporting the shaft, namely, to support the shaft only on one side of the rotor or the impeller; or to support the shaft on both sides of the rotor or the impeller. According to the design where only one end of the shaft is supported - usually this is the drive end of the shaft - the rotor or the impeller is usually arranged at the non-drive end of the shaft. This design is also called "overhung" design. If both the drive end and the non-drive end of the shaft are supported by a respective bearing assembly, the impeller or the rotor is arranged between the two bearing assemblies. Therefore, this embodiment is also called "between bearing" design.

Bearing assemblies for supporting a shaft of a rotating machine, which comprise a bearing housing for receiving a lubricant, a rotary part configured to be fixedly connected to the shaft and a stationary part fixed relative to the bearing housing wherein the rotary part has a rotor bearing surface and the stationary part has a stator bearing surface configured and arranged for interacting with the rotor bearing surface during the operation of the rotation machine are well-known.

Bearing assemblies require a lubricant that forms a lubricating film between the rotor bearing surface and the stator bearing surface. It is known to use either the process fluid, e.g. the fluid delivered by a pump, as the lubricant or to provide a separate lubricant different from the process fluid.

A well-known type of bearing assemblies are those which are configured as white metal bearing assemblies. That means, that the bearings in the assembly are configured as white metal bearings. A white metal bearing is a composite bearing. Parts of a harder metallic material are dispersed in a softer metallic matrix. During operation of the rotating machine, the softer areas of the white metal bearing erode, creating grooves and holes for the lubricant.

In another embodiment of the bearing assemblies, the stationary part comprises a base body and a polymer layer which is bonded to the base body. Such type of bearing assemblies is referred as polymer bearings. They are used for example for pumping applications involving clean and especially particle free lubricants. So, they can be considered as an alternative to traditional white metal bearings. Polymer bearings offer superior tribological behavior especially for low viscous lubricants. Thus, the use of a polymer layer as the stator bearing surface leads to an improvement in the tribological properties of the bearing unit compared to the use of a conventional bearing assembly with metallic surfaces as bearing surfaces.

To achieve the bonding of the polymer to the base body surface a bonding layer is required. The bonding layer is a material that can interact with both materials, the polymer, and the material of the base body. But the bonding layer has some disadvantages.

In addition to the additional manufacturing step and material cost, another problem is that the use of bonding layers reduces the width of the bearing assemblies' application range. The materials which are used for the bonding layers have limited chemical stability. Therefore, not every lubricant can be used with this kind of bearing assembly because such lubricant can damage the bonding layer. When the bearing assembly is used in process fluid lubricated rotating machines the use is restricted to those process fluids which do not damage the bonding layer.

Starting from this state of the art, it is therefore an object of the invention to propose a bearing assembly that offers the superior tribological properties of polymer bearings while increasing the range of lubricants that can be used for lubricating the bearing assembly. Furthermore, a rotating machine shall be proposed comprising such a bearing assembly.

The subject matter of the invention satisfying these objects is characterized by the features of the respective independent claim.

Thus, according to the invention a bearing assembly for supporting a shaft of a rotating machine is proposed, comprising a bearing housing for receiving a lubricant, a rotary part configured to be fixedly connected to the shaft and a stationary part fixed relative to the bearing housing, wherein the rotary part has a rotor bearing surface and the stationary part has a stator bearing surface configured and arranged for interacting with the rotor bearing surface, wherein the rotary part or the stationary part comprises a base body and a polymer layer, wherein the base body has a structured surface, wherein the polymer layer is directly fixed to the structured surface, and wherein the polymer layer forms the rotor bearing surface or the stator bearing surface.

An important aspect of the bearing assembly is that, due to the structured surface of the base body, no additional bonding or adhesive layer is required to fix the polymer layer to the base body.

By eliminating the bonding layer the range of lubricants that can be used for lubricating the bearing assembly is considerably enlarged compared to the prior art bearing assemblies. For example, it is possible to use seawater for pumps where the bearing assembly is process fluid lubricated.

The removal of the bonding layer makes the production costs of the bearing assembly lower, as there are neither additional material costs nor costs for preparation and additional manufacturing. At the same time, time can also be saved during production, which in turn has a positive effect on costs. In some embodiments the process of connecting the polymer and the base body requires only two steps. First the surface of the base body is structured and second the polymer is molded onto the structured surface. This process is also known as "form-locking". Furthermore, bearing assemblies can be built more compactly since space is saved by eliminating the bonding layer.

In some embodiments the polymer layer is mechanically fixed in the structured surface. This can be achieved for example by pressing. One or more stripes of the polymer material is placed on the structured surface of the base body and fixed by applying pressure on the polymer stripes. Since no molding but only a partial melting or softening of the polymer material is required in this case, less energy is needed to bond the polymer layer to the base body. It is also possible to bond the base body and the polymer layer using an autoclave.

In some embodiments the structured surface comprises notches or grooves, which are preferably arranged in a regular manner. This allows an easier and stronger connection between the base body and the polymer layer. The notches or grooves can be, for example, rectangular recesses or serrations. Other configurations are also possible, e.g., dovetails. The polymer material is pressed into the notches or grooves therewith fixing the polymer layer in the structured surface by building tenons which are engaging with the structured surface.

In a preferred case, the notches or grooves are arranged in a recurring pattern so that a uniformly structured surface is formed. There are several possibilities to form the structured surface. In some embodiments the structured surface is formed by machining, preferably by milling. In other embodiments the structured surface is chemically formed, preferably by etching. In still other embodiments the structured surface is formed by laser structuring or electrical discharge machining.

In some embodiments only the rotary part comprises the base body and the polymer layer. This has the advantage of minimizing the risk of local wear (deformation) of the polymer bearing surface. If the design loads are temporarily exceeded, this can cause a direct contact between the stator bearing surface and the rotor bearing surface. The rotary part can compensate for such an abnormal movement more quickly, thus minimizing the risk of wear of the polymer layer attached to the rotary part.

In other embodiments only the stationary part comprises the base body and the polymer layer. This can be an advantageous measure, as the requirements for bonding the base body and the polymer layer are reduced, since, for example, no centrifugal forces acting on the polymer layer, need to be taken into account in the manufacture of the bearing assembly. Therefore, more cost-effective bonding technologies can be used.

An advantageous measure is that the structured surface is configured to have three times the surface area of an unstructured surface having the same extension as the structured surface. If one looks at the base body without a structured surface, it has a certain surface area. If this surface area is processed with the techniques already mentioned, a structured surface of the base body is formed. This structuring of the surface by e.g., notches or grooves provides an increase in surface area which is preferably at least three times as large as the unstructured surface of the base body.

Preferably the structured surface is configured to have a maximum depth of roughness (Rmax) which is larger than 100 µm. In addition, the structured surface is preferably structured with a regular or a periodic pattern.

In preferred embodiments the base body is made of a metallic material, preferably a stainless steel. This measure has the advantage to combine the high mechanical strength of a metallic material with the outstanding tribological performance of the polymer. This increases the robustness of the bearing assembly against failures and significantly increases its lifetime.

A preferred material for the polymer layer is PEEK (Polyether ether ketone). PEEK has excellent tribological behavior. It is also easy to handle during the manufacturing process. Furthermore, other materials for the polymer layer can be used, e.g. PPS (Polyphenylene sulfide) or UHMWPE (Ultra-high-molecular-weight polyethylene).

In some embodiments the bearing assembly is configured as a tilting pad bearing assembly, which can be configured both, as a radial and as an axial tilting pad bearing assembly. The number of tilting pads is at least two. In some embodiments, the bearing assembly comprises more than two tilting pads, preferably for example at least five or even more than ten. In other embodiments the bearing assembly can comprise fixed geometry bearings, such as 4-lobe or lemon bore bearings.

In some embodiments the bearing assembly is configured as a radial bearing assembly, which is also known as journal bearing assembly. In other embodiments the bearing assembly is configured as an axial bearing assembly. Axial bearing assemblies are also known as thrust bearing assemblies.

In addition, by the invention a rotating machine is proposed having a rotating machine housing, at least one impeller for acting on a process fluid, a shaft fixedly connected with the impeller for rotating the impeller and a bearing assembly for supporting the shaft, wherein the rotating machine comprises at least one bearing assembly according to the invention.

In particular, the rotating machine can be configured as a centrifugal pump. Centrifugal pumps can have only one impeller or a plurality of impellers. Pumps with more than one impeller are known as multistage pumps. The impeller(s) of the centrifugal pump can be configured, for example, as a radial impeller, an axial impeller, a helicoaxial impeller or a mixed flow impeller.

Important areas of application for such pumps are, for example, the energy sector, the oil and gas industry or the power generation industry, the chemical industry, the water industry or the pulp and paper industry.

In preferred embodiments, each bearing assembly of the rotating machine is configured to be lubricated with the process fluid. This may be the case, for example, with pumps used for subsea applications, e.g. the rotating machine can be configured as a subsea pump for deployment on the sea ground. In such applications the process fluid seawater or a hydrocarbon fluid can be used as lubricant.

It goes without saying that the bearing assembly according to the invention can be used in other rotating machinery such as motors, compressors, turbines, engines, gearboxes, drive shafts, propeller shafts etc., having shafts orientated in a vertical, horizontal or other direction.

Further advantageous measures and embodiments of the invention will become apparent from the dependent claims.

The invention will be explained in more detail hereinafter with reference to embodiments of the invention and to the drawings. There are shown in a schematic representation:
- Fig. 1:: a first embodiment of a rotating machine according to the invention in a cross-sectional schematic view,
- Fig. 2:: a second embodiment of a rotating machine according to the invention in a cross-sectional schematic view,
- Fig. 3:: a cross-sectional view of a first embodiment of a bearing assembly according to the invention,
- Fig. 4:: a cross-sectional view of a second embodiment of a bearing assembly according to the invention,
- Fig. 5:: a cross-sectional view of a third embodiment of a bearing assembly according to the invention, and
- Fig. 6:: a cross-sectional view of a fourth embodiment of a bearing assembly according to the invention.

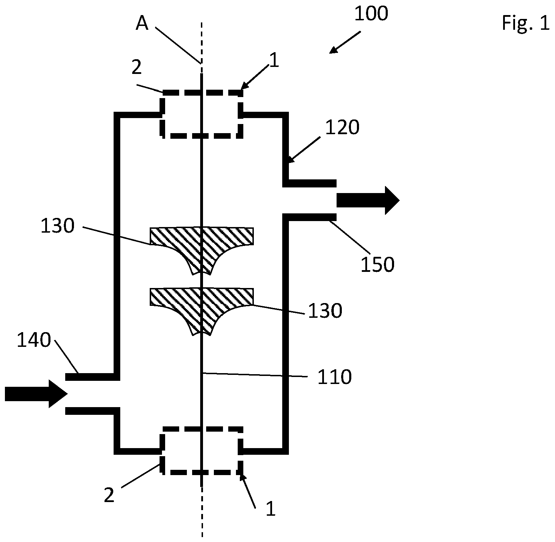

Fig. 1 shows a first embodiment of a rotating machine 100 according to the invention in a cross-sectional schematic view. The first embodiment of the rotating machine 100 is configured as a centrifugal pump 100 for conveying a process fluid. Centrifugal pumps 100 are used in many different industries, for example, in the oil and gas processing industry, the power generation industry, the chemical industry, the water industry or the pulp and paper industry.

As an example, reference is now made to an important application of centrifugal pumps 100, namely a centrifugal pump 100 configured as a process fluid lubricated subsea pump 100.

The term "process fluid lubricated pump" refers to pumps, where the process fluid that is conveyed by the pump 100 is used for the lubrication and the cooling of components of the pump, e.g. the bearings. Thus, a process fluid lubricated pump 100 uses the process fluid itself or the modified (e.g. by a filtration process) process fluid for the lubrication and/or cooling of pump components. There is no separate lubricant required, e.g. an oil, for the lubrication and the cooling of the pump components, such as the bearings. The advantage of the process fluid lubricated pump 100 is that it does not require a separate oil or fluid lubrication system as it is required in other types of pumps. When the pump is not lubricated by the process fluid or the modified process fluid, a shaft seal is required which separates the process fluid both from the environment and from the lubrication system filled with a lubricant different from the process fluid.

In particular regarding subsea applications, when the pump 100 is configured e.g. for deployment on the sea ground, the process fluid lubricated pump 100 does not require a specific barrier fluid different from the process fluid to avoid leakage of the process fluid e.g. into a drive unit for driving the pump 100. In addition, the process fluid lubricated pump 100 does not require a lubricant different from the process fluid for the lubrication of the pump components. In the following description reference is made by way of example to the important application that the process fluid is water, in particular seawater. The term seawater comprises raw seawater, purified seawater, pretreated seawater, filtered seawater, in particular microfiltered seawater and nanofiltered seawater. Thus, the process fluid raw seawater may be modified, for example by a filtration, prior to being used as a coolant or lubricant in the process fluid lubricated pump 100.

Of course, the centrifugal pump 100 according to the invention may also be configured for conveying other process fluids than water or seawater, such as super-critical carbon dioxide or any other super-critical fluid. The centrifugal pump 100 can also be configured to convey hydrocarbon fluids. In particular for conveying multiphase hydrocarbon fluids comprising for example a gaseous phase and a liquid phase, the centrifugal pump 100 can be configured as a multiphase centrifugal pump with helicoaxial impeller(s).

In other embodiments the centrifugal pump 100 is configured for a lubricant different from the process fluid, in particular for a lubricant having a low viscosity.

In particular, the centrifugal pump 100 shown in Fig. 1 is configured and adapted for being used as a subsea pump, e.g. a subsea water injection pump 100 in the oil and gas industry, for injecting water into a subterranean oil and/or gas reservoir to increase recovery of hydrocarbons from the subterranean region. By injecting the water into the reservoir, the hydrocarbons are forced to flow towards and out of the production well. Accordingly, the process fluid that is conveyed by the pump 100 is water and especially seawater. The process fluid lubricated pump 100 is in particular configured for installation on the sea ground, i.e. for use beneath the water surface, in particular down to a depth of 200 m, down to 1000 m or even down to more than 2000 m beneath the water surface of the sea.

As an additional subsea application, the centrifugal pump 100 can be configured for subsea water desalination by reverse osmosis.

Of course, the invention is not restricted to centrifugal pumps 100 configured as subsea pumps, but also relates to other types of rotating machines, such as centrifugal pumps in general, compressors, or turbines.

Referring to Fig. 1, the centrifugal pump 100, comprises a rotating machine housing 120, an inlet 140 for receiving the process fluid and an outlet 150 for discharging the process fluid. The flow direction of the process fluid to be pumped is indicated by the arrows without a reference numeral. In the rotating machine housing 120 two impellers 130 are arranged for acting on the process fluid, and a shaft 110 fixedly connected with the impellers 130 for rotating the impellers 130 about an axial direction A, which is defined by the longitudinal extension of the shaft 110.

A direction perpendicular to the axial direction A is referred to as radial direction. The term `axial' or `axially' is used with the common meaning 'in axial direction' or 'with respect to the axial direction'. In an analogous manner the term 'radial' or 'radially' is used with the common meaning 'in radial direction' or 'with respect to the radial direction'.

The centrifugal pump 100 further comprises two bearing assemblies 1 for supporting the shaft 110. Each bearing assembly is designated with reference numeral 1 and configured according to the invention as will be explained in more detail hereinafter. The number of bearing assemblies 1 is just exemplary here. It is also possible that there are less than two or more than two bearing assemblies 1. For example, large vertical pumps may have one or more intermediate bearing assemblies because the length of the shaft is so great that it would bend or vibrate too strongly, without one or more intermediate bearing assemblies and the pump could not be operated reliably.

According to the configuration shown in Fig. 1, the two impellers 130 are arranged between the two bearing assemblies 1 regarding the axial direction A, i.e. the centrifugal pump 100 is configured as a between-bearing pump, where the shaft 110 is supported on both sides of the impellers 130.

The number of two impellers 130 is just exemplary. In other embodiments the pump 100 has only one impeller 130. In still other embodiments the pump 100 has more than two impellers 130. Such pumps 100 with more than one impeller 130 are also known as multistage pumps.

According to the embodiment shown in Fig. 1, the process fluid lubricated pump 100 is configured as a vertical pump 100, meaning that during operation, the shaft 110 is extending in the vertical direction, which is the direction of gravity. Thus, the axial direction A coincides with the vertical direction.

Each bearing assembly 1 comprises a bearing housing 2 for receiving a lubricant. As already said, the centrifugal pump 100 shown in Fig. 1 is configured as a process fluid lubricated pump 100, i.e. the lubricant is the process fluid.

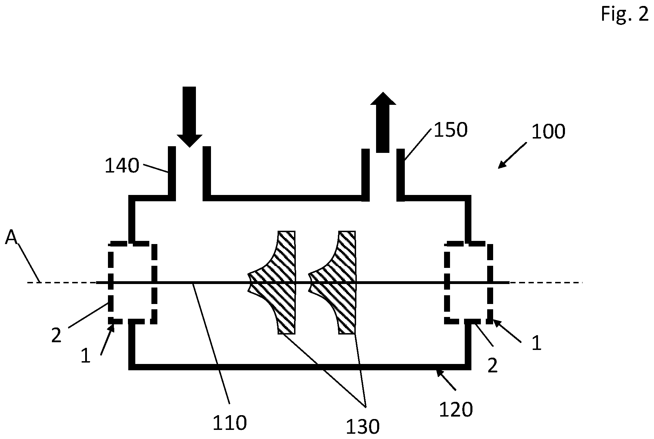

Fig. 2 shows a second embodiment of a rotating machine 100 according to the invention in a cross-sectional schematic view. As in the first embodiment, the rotating machine 100 is configured as centrifugal pump 100. In the following description of the second embodiment of the pump 100 only the differences to the first embodiment are explained in more detail. The explanations with respect to the first embodiment are also valid in the same way or in analogously the same way for the second embodiment. Same reference numerals designate the same features that have been explained with reference to the first embodiment or functionally equivalent features.

The second embodiment is a centrifugal pump 100 configured as a horizontal pump, meaning that during operation, the shaft 110 is extending horizontally, i.e. the axial direction A is perpendicular to the direction of gravity.

According to the first and the second embodiment the centrifugal pump is configured as a between-bearing pump having two bearing assemblies 1, namely with respect to the axial direction A one bearing assembly 1 on each side of the impellers 130. In other embodiments the centrifugal pump 100 may be configured with an overhung design, in which the shaft 110 is supported only on one side of the impellers 130. In an overhung design the impeller(s) is/are typically mounted at the non-drive end of the shaft 110. According to the overhung design, only on one side of the impeller(s) a bearing assembly is provided.

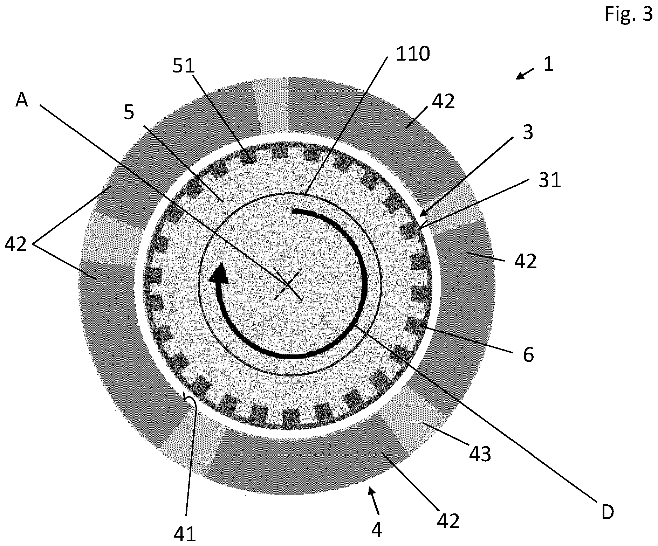

Fig.3 shows a schematic cross-sectional view of a first embodiment of a bearing assembly 1 according to the invention. The bearing assembly 1 is configured as a radial bearing assembly 1 for supporting the shaft 110 of the rotating machine 100 with respect to the radial direction. A radial bearing assembly is also referred to as journal bearing assembly. The bearing assembly 1 comprises the bearing housing 2 for receiving the lubricant, a rotary part 3 configured to be fixedly connected to the shaft 110 and a stationary part 4 fixed relative to the bearing housing 2. The rotary part 3 is connected to the shaft 110 in a torque proof manner and comprises a rotor bearing surface 31. The rotary part 3 can be configured as a sleeve, which is mounted to the shaft 110, for example by a key lock, a shrink joint or any other known joint. The stationary part 4 is stationary with respect to the bearing housing 2 regarding the axial direction A and comprises a stator bearing surface 41 configured and arranged for interacting with the rotor bearing surface 31.

The bearing assembly 1 is configured as a friction bearing supporting the shaft 100 by means of the interaction between the rotor bearing surface 31 and the stator bearing surface 41. During operation, when the shaft 110 rotates about the axial direction A, a film of lubricant, here the process fluid, forms between the rotor bearing surface 31 and the stator bearing surface 41 as it is as such known in the art. The bearing assembly 1 can be configured as any type of friction bearing, which is known in the art. For example, the rotary part 3 can be configured as a cylindrical sleeve enclosing the shaft 110, and the stationary part 4 can be configured as a cylindrical sleeve fixed relative to the bearing housing 2 and surrounding the rotary part 3, such that during operation an annular gap is formed between the rotary part 3 and the stationary part 4. The gap is filled with the lubricant, which is the process fluid. In other embodiments the bearing assembly 1 can comprise other types of fixed geometry bearings, such as 4-lobe or lemon bore bearings.

The first embodiment of the bearing assembly 1 is configured as a tilting pad journal bearing assembly 1. Since tilting pad journal bearings as such are well known to the person skilled in the art, it is not necessary to explain its operating mode in more detail.

Referring to Fig. 3, the rotary part 3 is configured as a cylindrical sleeve, which is fixedly connected to the shaft 110 in a torque proof manner. The rotary part 3 comprises a base body 5 and a polymer layer 6. The base body 5 has a structured surface 51, and the polymer layer 6 is directly fixed to the structured surface 51, i.e. without a bonding layer between the polymer layer 6 and the base body 5. The polymer layer 6 forms the rotor bearing surface 31, so that the entire rotor bearing surface 31 consists of the polymer layer 6. As already said, the first embodiment of the bearing assembly 1 is configured as a tilting pad journal bearing assembly 1. The stationary part 4 comprises a plurality of -here five - bearing segments 42, each of which is configured as a tilting pad. The bearing segments 42 are connected to a support structure 43. This support structure 43 is an annular component surrounding the shaft 110. As it is known in the art, each bearing segment 42 is connected to the support structure 43 by means of a pivot, so that each bearing segment 42 can perform a tilting movement about the axial direction and relative to the support structure 43 carrying the bearing segments 42. The radially inner surfaces of all the bearing segments 42 together build the stator bearing surface 41.

Furthermore, the radial bearing assembly 1 comprises the rotary part 3, which is fixedly connected to the shaft 110. In the first embodiment only the rotary part 3 comprises the base body 5 having the structured surface 51 and the polymer layer 6 fixedly connected to the base body 5 and forming the rotor bearing surface 31. The rotary part 3 is configured to rotate around the axial direction A. The direction of the rotation is indicated by the arrow with the reference numeral D.

Preferably, the base body 5 of the rotary part 3 is made of a metallic material, e.g. a stainless steel. There are several possibilities to form the structured surface 51 of the base body 5. For example, the structured surface 51 can be generated by machining, such as milling. It is also possible to generate the structured surface 51 chemically, e.g. by etching. Another possibility is to generate the structured surface 51 by laser texturing. In the first embodiment the structured surface 51 comprises a plurality of notches or grooves, which are arranged in a regular manner. Each notch extends in the axial direction A along the rotary part 3. The plurality of notches is distributed around the entire circumference of the rotary part. However, it is not necessary that the notches or grooves are arranged in a regular manner.

The cross-section of the individual notches and the arrangement of the notches has to be understood exemplary. The notches may have, for example, a U-formed or V-formed cross-section or can be configured as a dovetail. Furthermore, it is possible to additionally or alternatively provide notches extending in the circumferential direction or any other direction on the surface of the rotary part. In addition, it is also possible to provide curved notches. The structured surface 51 shall have a texture, in which the polymer layer 6 can be reliably fixed by a predominantly mechanical anchoring. For example, the polymer layer 6 is connected to the structured surface 51 by a form-locking.

In some embodiments the notches or grooves which are forming the structured surface 51 have a preferred orientation direction. The preferred orientation is such that during operation the polymer layer 6 is manly loaded perpendicular to the preferred orientation. Thus, the grooves are preferably arranged perpendicular to the stress direction, in which the rotary part 3 or the stationary part 4 is mainly loaded. This has the advantage of improving the locking connection between the polymer layer 6 and the structured surface 51 of the base body 5. Orienting the grooves perpendicular to the main direction of load prevents the polymer layer 6 from slipping back and forth in the notches and/or grooves while the rotary part 3 or the stationary part 4 is under stress. A back and forth slipping of the polymer layer 6 in the notches and/or grooves of the structured surface 51 of the base body 5, which would considerably weaken the connection between the base body 5 and the polymer layer 6.

Preferably, the structured surface 51 has a maximum depth of roughness (Rmax) which is bigger than 100 µm. As it is commonly used in the art, the maximum depth of roughness Rmax is the vertical difference between the deepest groove and the highest peak within a defined total measuring distance of a surface. In this case the total measuring distance is this part of surface of the base body 5 which has the structured surface 51 and forms together with the polymer layer 6 either the stator bearing surface 41 or the rotor bearing surface 31. A maximum depth of roughness of more than 100 micrometer clearly differentiates the structured surface 51 over a rough surface with a random structure as it is for examples generated by thermally spraying of a material.

The process of structuring the surface of the base body 5 to generate the structured surface 51 increases the radially outer surface area of the base body 5 by at least two times compared to the surface area of an unstructured, macroscopically smooth radially outer surface of a base body 5. Therefore, there is a larger surface area for connecting with the polymer layer 6, resulting in a more stable bond between the base body 5 and the polymer layer 6 without the need for an extra bonding layer between them. Therefore, it is possible to mechanically fix the polymer layer 6 in the structured surface 51, for example by pressing one or more stripes or plates of the polymer material into the structured surface 51.

The pressing of the polymer material into the structured surface 51 can be performed, for example, by unidirectionally pressing the polymer material into the structured surface 51. Unidirectionally pressing is in particular a preferred method for axial bearing assemblies because the bearing surfaces 31, 41 are flat, i.e. non-curved surfaces.

Other methods for providing the polymer layer 6 and fixing it in the structured surface 51 comprise additive manufacturing, for example by means of an extruder pressing the softened polymer material into the structured surface 51. In an extruder process, the polymer is extruded as a viscous mass with high pressure and increased temperature.

A further preferred method for providing the structured surface 51 with the polymer layer 6 is using an autoclave process.

In an autoclave process, the base body 5 with the structured surface 51 is placed in an autoclave device and the polymer layer 6 is applied to this surface either as a film, plate, or powder. The device is then evacuated so that no air remains between the structured surface 51 and the polymer material. In the next step, the bond between the structured surface 51 and the polymer layer 6 is established by increasing the pressure and thetemperature.

However, other methods of bonding the structured surface 51 and the polymer layer 6 are also possible. For example, it is also possible to bond the polymer layer 6 to the structured surface 51 by heating. To bond the base body 5 and the polymer layer 6 by a heating or a heat treatment process an autoclave can be used.

The polymer layer 6 is preferably made from a polymer material having very good tribological properties. For example, the polymer layer 6 is made from PEEK (Polyester ester ketone) or a compound which comprises PEEK. Furthermore, other materials for the polymer layer 6 can be used, e.g., PPS (Polyphenylene sulfide) or UHMWPE (Ultra-high-molecular-weight polyethylene).

The polymer layer 6 may be formed from a plate, one or more sheets a tube or a powder of the polymer material.

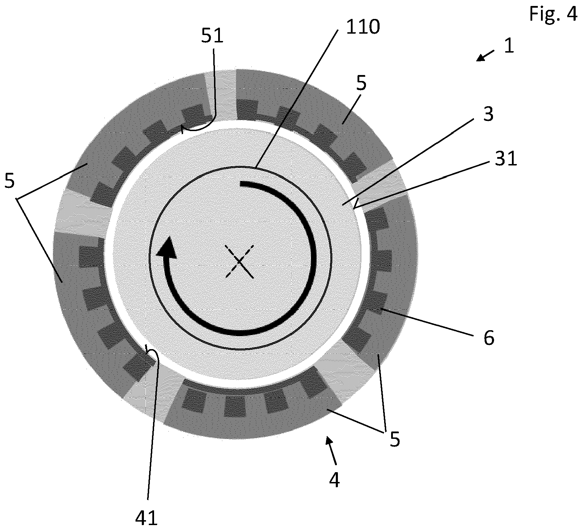

Fig. 4 shows a cross-sectional view of a second embodiment of a bearing assembly according to the invention. In the following description of the second embodiment of the bearing assembly 1 only the differences to the first embodiment are explained in more detail. The explanations with respect to the first embodiment are also valid in the same way or in analogously the same way for the second embodiment. Same reference numerals designate the same features that have been explained with reference to the first embodiment or functionally equivalent features.

In the second embodiment of the bearing assembly 1 shown in Fig. 4 the polymer layer 6 is provided at the stationary part 3 and the rotary part 3 has no polymer layer 6. Accordingly, only the stationary part 4 comprises the base body 5 with the structured surface 51 and the polymer layer 6. The rotary part 3 does not comprise a base body 5 neither a structured surface 51. The rotary part 4 is preferably configured as a cylindrical sleeve made of a metallic material. The second embodiment comprises five base bodies 5 and five polymer layers 6, wherein each of the base bodies 5 has a structured surface 51 for the better connection to the respective polymer layer 6. Thus, the radial inner surface of all five polymer layers 6 together form the stator bearing surface 41. Each base body 5 with the polymer layer 6 fixed to it is configured as a tilting pad of the tilting pad journal bearing assembly 1.

It goes without saying that the number of base bodies 5 in the first and the second embodiment shown in Fig. 3 and Fig. 4 are just exemplary. It is also possible that the bearing assembly 1 comprises more or less than five base bodies 5.

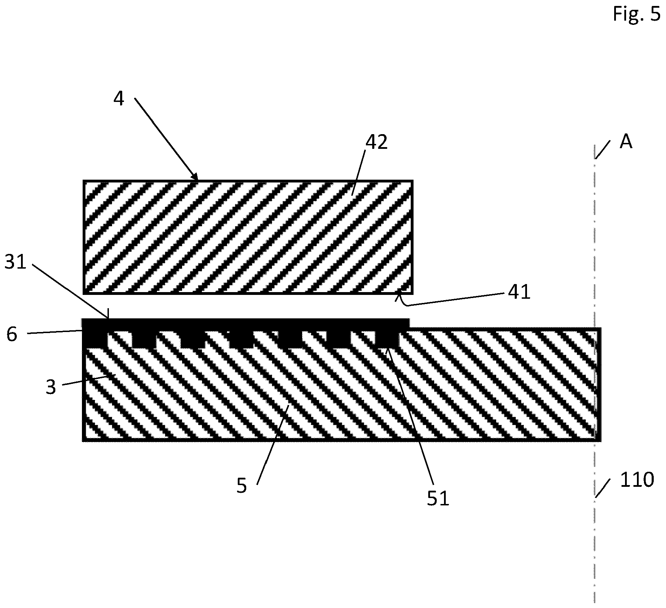

Fig. 5 is a cross-sectional view of a third embodiment of a bearing assembly 1 according to the invention. In the following description of the third embodiment of the bearing assembly 1 only the differences to the two previously described embodiments are explained in more detail. The explanations with respect to the first and the second embodiment are also valid in the same way or in analogously the same way for the third embodiment. Same reference numerals designate the same features that have been explained with reference to the first and the second embodiment or functionally equivalent features.

In the third embodiment the bearing assembly 1 is configured as an axial bearing assembly 1. Such bearing assemblies 1 are also known as thrust bearing assemblies 1. The third embodiment is configured as a tilting pad thrust bearing assembly 1. The stationary part 4 is fixed to the bearing housing 2 (not shown in Fig. 5). The stationary part 4 comprises a plurality of bearing segments 42, each of which is configured as a tilting pad. In Fig. 5, only one of the pluralities of bearing segments 42 is shown. The tilting pads are arranged on a support structure (not shown in Fig. 5), e.g. an annular carrier, As it is known in the art, each bearing segment 42 is connected to the support structure 43 by means of a pivot, so that each bearing segment 42 can perform a tilting movement about the axial direction A and relative to the support structure 43 carrying the bearing segments 42.

Both the rotor bearing surface 31 and the stator bearing surface 41 are plain surfaces being extending perpendicular to the axial direction A.

Furthermore, the axial bearing assembly 1 comprises a rotary part 3 which is fixedly connected to the shaft 110 in a torque proof manner. The rotary part is for example configured as a cylindrical collar enclosing the shaft 110. In the third embodiment only the rotary part 3 comprises the base body 5 which has the structured surface 51 and the polymer layer 6 forming the rotor bearing surface 31. The rotary part 3 is configured to rotate about the axial direction A.

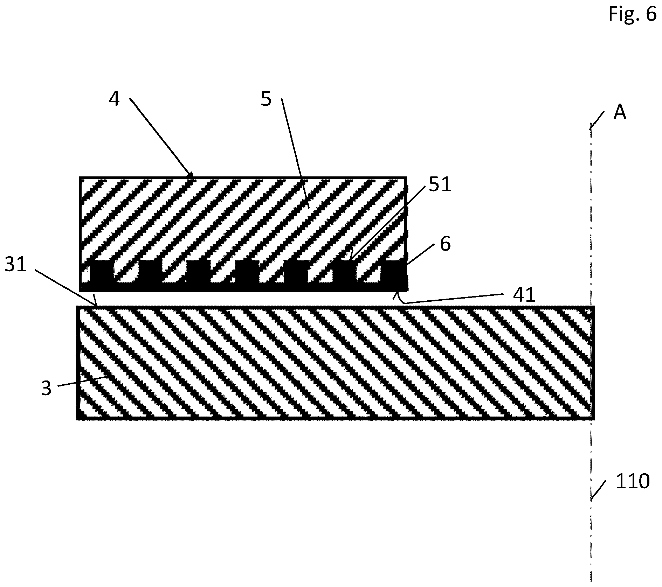

Fig. 6 shows a cross-sectional view of a fourth embodiment of a bearing assembly 1 according to the invention. In the following description of the fourth embodiment of the bearing assembly 1 only the differences to the three previously described embodiments are explained in more detail. The explanations with respect to the first, second and third embodiment are also valid in the same way or in analogously the same way for the fourth embodiment. Same reference numerals designate the same features that have been explained with reference to previously described embodiments or functionally equivalent features.

In the fourth embodiment of the bearing assembly 1 shown in Fig. 6, the polymer layer 6 is provided at the stationary part 4 and the rotary part 3 has no polymer layer. Accordingly, only the stationary part 4 comprises the base body 5 with the structured surface 51 and the polymer layer 6. The rotary part 3 does not comprise a base body 5 neither a structured surface 51. The rotary part 3 is preferably configured as a cylindrical sleeve made of a metallic material. The fourth embodiment comprises a plurality of base bodies 5, e.g. five base bodies 5. In Fig. 6 only one of the plurality of base bodies 5 is shown. Each of the base bodies 5 is provided with a polymer layer 6 and has a structured surface 51 for the better connection to the respective polymer layer 6. Thus, the five surfaces of all five polymer layers 6, which are facing the rotary part 3, together form the stator bearing surface 41. Each base body 5 with the polymer layer 6 fixed to it is configured as a tilting pad of the tilting pad thrust bearing assembly 1.

## Claims

1. A bearing assembly (1) for supporting a shaft (110) of a rotating machine comprising a bearing housing (2) for receiving a lubricant, a rotary part (3) configured to be fixedly connected to the shaft (110) and a stationary part (4) fixed relative to the bearing housing (2), wherein the rotary part (3) has a rotor bearing surface (31) and the stationary part (4) has a stator bearing surface (41) configured and arranged for interacting with the rotor bearing surface (31), **characterized in that** the rotary part (3) or the stationary part (4) comprises a base body (5) and a polymer layer (6), wherein the base body (5) has a structured surface (51), wherein the polymer layer (6) is directly fixed to the structured surface (51), and wherein the polymer layer (6) forms the rotor bearing surface (31) or the stator bearing surface (41).

2. A bearing assembly in accordance with anyone of the preceding claims, wherein the polymer layer (6) is mechanically fixed in the structured surface (51).

3. A bearing assembly in accordance with anyone of the preceding claims, wherein the structured surface comprises notches and/or grooves, which are preferably arranged in a regular manner.

4. A bearing assembly in accordance with anyone of the preceding claims, wherein the structured surface (51) is formed by machining, preferably by milling.

5. A bearing assembly in accordance with anyone of the preceding claims, wherein the structured surface (51) is formed by laser structuring or electrical discharge machining.

6. A bearing assembly in accordance with anyone of the preceding claims, wherein only the rotary part (3) comprises the base body (5) and the polymer layer (6).

7. A bearing assembly in accordance with anyone of claims 1 - 5, wherein only the stationary part (4) comprises the base body (5) and the polymer layer (6).

8. A bearing assembly in accordance with anyone of the preceding claims, wherein the maximum depth of roughness, Rmax, of the structured surface (51) is larger than 100 µm.

9. A bearing assembly in accordance with anyone of the preceding claims, wherein the base body (5) is made of a metallic material, preferably a stainless steel.

10. A bearing assembly in accordance with anyone of the preceding claims, wherein the polymer layer (6) comprises PEEK.

11. A bearing assembly in accordance with anyone of the preceding claims, configured as a tilting pad bearing assembly.

12. A bearing assembly in accordance with claim 1, wherein the bearing assembly (1) is configured as a radial bearing assembly or as an axial bearing assembly.

13. A rotating machine (100) having a rotating machine housing (120), at least one impeller (130) for acting on a process fluid, a shaft (110) fixedly connected with the impeller (130) for rotating the impeller (130) and a bearing assembly (1) for supporting the shaft (110), **characterized in that** the rotating machine (100) comprises at least one bearing assembly (1) in accordance with anyone of the preceding claims.

14. A rotating machine in accordance with claim 14, wherein the bearing assembly (1) is configured to be lubricated with the process fluid.

15. A rotating machine in accordance with claim 13 or 14, configured as a subsea pump and preferably configured for installation on a sea ground.
